# EUROPEAN PATENT APPLICATION

(11) **EP 2 692 231 A1**
(43) Date of publication of application: **05.02.2014**
(21) Application number: 12178636.2
(22) Date of filing: 31.07.2012
(51) Int. Cl.: A01K 97/02

(54) **Feeder**

(71) Applicant: Hardy & Greys Ltd, Alnwick Northumberland NE66 2PF (GB)
(72) Inventor: Bond, Christopher, Whitley Bay, Tyne and Wear NE25 9S (GB); Coster, David, Alnwick, Northumberland NE66 1TS (GB)
(74) Representative: Vinsome, Rex Martin

(57) **Abstract**

A feeder (10) for receiving fishing bait is described, the feeder (10) comprising a first portion or base (12), attachable to a fishing line and a second portion or shell (14), attachable to the first portion (12). An interior region for holding bait is defined at least in part by the second portion (14). The second portion (14) is at least partially water-soluble. When the feeder (10) is loaded with bait and cast into water, at least part of the shell (14) dissolves to release the bait, leaving only the base (12) to be retrieved. The second portion (14) may be provided with perforations (24) or ridges (26).

## Description

The present invention relates to feeders for use in coarse fishing. In particular, but not exclusively, the invention relates to swim feeders and method feeders and the like.

Known method feeders rely on vanes or protrusions to anchor sticky ground bait or moist pellets to the feeder. For example, one known method feeder comprises a flattish base part which has a number of parallel vanes protruding perpendicularly from one side. Bait is compressed onto the feeder around the vanes. This can be done using a separate mould which is filled with bait before pressing the vanes of the feeder into the mould. A problem associated with this type of method feeder is that it can be difficult to secure the bait to the feeder, and only compressed bait can be used. Another problem is that the vanes or protrusions create significant resistance or drag when the feeder is retrieved. Hook baits can also be obscured or snagged on the vanes or protrusions.

Preferred embodiments of the present invention seek to overcome one or more of the above disadvantages of the prior art.

According to a first aspect of the present invention, there is provided a feeder for receiving fishing bait, the feeder comprising:
a first portion attachable to a fishing line; and
a second portion attachable to the first portion, wherein an interior region for holding bait is defined at least in part by the second portion;
wherein the second portion is at least partially water-soluble.

When cast into water, at least part of the second portion will eventually dissolve, releasing the bait from the feeder. Advantageously, this leaves only the first portion of the feeder, which can therefore be retrieved with relatively low resistance. Unlike the known method feeder described above, no vanes or protrusions are required for retaining the bait, so the first portion may have a relatively low resistance to movement through the water, and hook baits are less likely to be obscured or snagged.

Another advantage is that hook baits may be hidden inside the interior region prior to casting out.

In one embodiment, the second portion is attachable to the first portion such that said interior region for holding bait is defined at least in part by the first and second portions.

This feature provides the feeder with the advantage that it can be used for both compressing and holding bait. It is not necessary to provide a separate mould for compressing the bait because the bait can be moulded or compressed between the first and second portions. In addition, the feeder of the present invention can also be used to hold loose bait which is not compressed.

In another embodiment, the interior region for holding bait is defined by the second portion.

The second portion may comprise at least two parts.

The second portion may comprise soluble PVA.

An advantage of using this material is that it is mouldable into different shapes, and can be coloured and/or flavoured.

The second portion may comprise a flavouring.

An advantage of this feature is that it can be used to attract fish.

The second portion may be perforated.

An advantage of this feature is that the second portion comprises less material and may dissolve more rapidly. The number and size of perforations may be varied in order to select the rate at which the second portion dissolves in water.

The second portion may comprise ridges or bands.

Advantageously, ridges or bands may be used to improve the rigidity of the second portion, while enabling other parts of the second portion to be thinner so as to dissolve more quickly. In this way, the rate at which the second portion dissolves can be controlled.

The second portion may be formed by a moulding process.

The first portion may comprise at least one notch or slot.

Advantageously, this enables hook baits to be anchored outside the feeder.

The second portion may comprise at least one notch or slot.

Advantageously, this enables hook baits to be anchored outside the feeder.

At least one said notch or slot of the first portion may be alignable with at least one said notch or slot of the second portion, when said first portion is attached to said second portion.

Advantageously, this feature enables a hook line to pass between the interior and exterior of the feeder, so that hook bait may be either hidden inside the feeder or anchored outside the feeder.

The first portion may comprise a bore or through-tube for receiving a fishing line.

The first portion may comprise a tube adapted to receive a fishing line and to attach the first and second portions to each other.

The second portion may be adapted to clip on to the first portion.

The second portion may be attachable to the first portion by pushing the first portion towards the second portion.

An advantage of this feature is that bait can be compressed or moulded between the first and second portions during the step of attaching the first and second portions together, improving the ease of filling the feeder.

The first portion may comprise a main body and a retaining member, the retaining member being adapted to cooperate with the main body to retain or clamp the second portion.

An advantage of this feature is that it may simplify the design of the second portion.

The retaining member may be rotatably coupled to the main body.

The retaining member may be adapted to contact a peripheral area of the second portion.

By contacting a peripheral area of the second portion, the retaining member is less likely to obstruct the movement of bait out of the feeder as the second portion dissolves.

The retaining member may be adapted to engage a recess or opening in the second portion.

The second portion may comprise at least one attachment member for attaching the second portion to the first portion, the attachment member being arranged to dissolve more rapidly than the bulk of the second portion to release the second portion from the first portion.

According to a second aspect of the present invention, there is provided a base for a feeder for receiving fishing bait, the base being adapted for attachment to a fishing line and to a bait-retaining portion of the feeder, wherein an interior volume for holding bait is defined at least in part by the bait-retaining portion.

The base may be adapted for attachment to a bait-retaining portion of the feeder such that an interior volume for holding bait is defined at least in part by the base and the bait-retaining portion.

Preferably, a surface of the base for facing said interior volume is substantially flat.

Advantageously, this feature reduces the resistance of the base to movement through the water, thereby reducing resistance to winding in a line to retrieve the base.

The base may comprise at least one notch or slot.

The base may comprise a bore or through-tube for receiving a fishing line.

A part of the base adapted to face the interior volume may comprise at least one opening.

According to a third aspect of the present invention, there is provided a bait-retaining portion for a feeder for receiving fishing bait, wherein the bait-retaining portion is attachable to a base of the feeder, an interior volume for holding bait being defined at least in part by the bait-retaining portion, wherein the bait-retaining portion is at least partially water-soluble.

The water-soluble bait-retaining portion provides a convenient means for releasing bait held in the feeder, and allows the base to have a more streamlined shape.

In one embodiment, the bait-retaining portion is attachable to the base of the feeder such that said interior volume for holding bait is defined at least in part by the base and bait-retaining portions.

In another embodiment, the interior volume for holding bait is defined by the bait-retaining portion.

The bait-retaining portion may comprise at least two parts.

The bait-retaining portion may comprise soluble PVA.

The bait-retaining portion may comprise a flavouring.

The bait-retaining portion may be perforated.

The bait-retaining portion may comprise ridges or bands.

The bait-retaining portion may comprise at least one notch or slot.

The bait-retaining portion may be formed by a moulding process.

The bait-retaining portion may comprise at least one attachment member for attaching the bait-retaining portion to the base of the feeder, the attachment member being arranged to dissolve more rapidly in water than a bulk of the bait-retaining portion to release the bait-retaining portion from the base.

According to a fourth aspect of the invention, there is provided a kit comprising:
a base as defined above, and
a plurality of bait-retaining portions as defined above.

Advantageously, this provides a supply of the dissolvable bait-retaining portions for use with a single reusable base.

The plurality of bait-retaining portions may comprise bait-retaining portions adapted to dissolve at different rates in water.

Advantageously, this allows an angler to select different bait-retaining portions depending on tactics.

Preferred embodiments of the present invention will now be described, by way of example only, and not in any limitative sense, with reference to the accompanying drawings, in which:
Figure 1 shows a side view of a feeder according to a first embodiment of the invention;
Figure 2 shows an end view of the feeder according to the first embodiment;
Figure 3 shows an end view of a shell or cover portion of the feeder according to the first embodiment;
Figure 4 shows a side view of a feeder according to a second embodiment of the invention;
Figure 5 shows a side view of a shell or cover portion of the feeder according to the second embodiment;
Figure 6 shows a side view of a feeder according to a third embodiment of the invention, with its retaining member in an open position;
Figure 7 shows a side view of the feeder according to the third embodiment, with its retaining member in a closed position;
Figure 8 shows a perspective view of a base portion of the feeder according to the third embodiment;
Figure 9 shows a front view of a feeder according to a fourth embodiment of the invention, with its retaining arms in a clamping position;
Figure 10 shows a side view of the feeder according to the fourth embodiment, with its retaining arms in a non-clamping position;
Figure 11 shows a side view of a capsule of the feeder according to the fourth embodiment;
Figures 12A and 12B illustrate various rigging configurations for the feeder according to the fourth embodiment;
Figure 13 shows a feeder according to a fifth embodiment of the invention;
Figure 14 shows a feeder according to a sixth embodiment of the invention;
Figures 15A, 15B and 15C illustrate various rigging configurations for the feeder of the present invention; and
Figures 16A and 16B illustrate various rigging configurations for the feeder of the present invention.

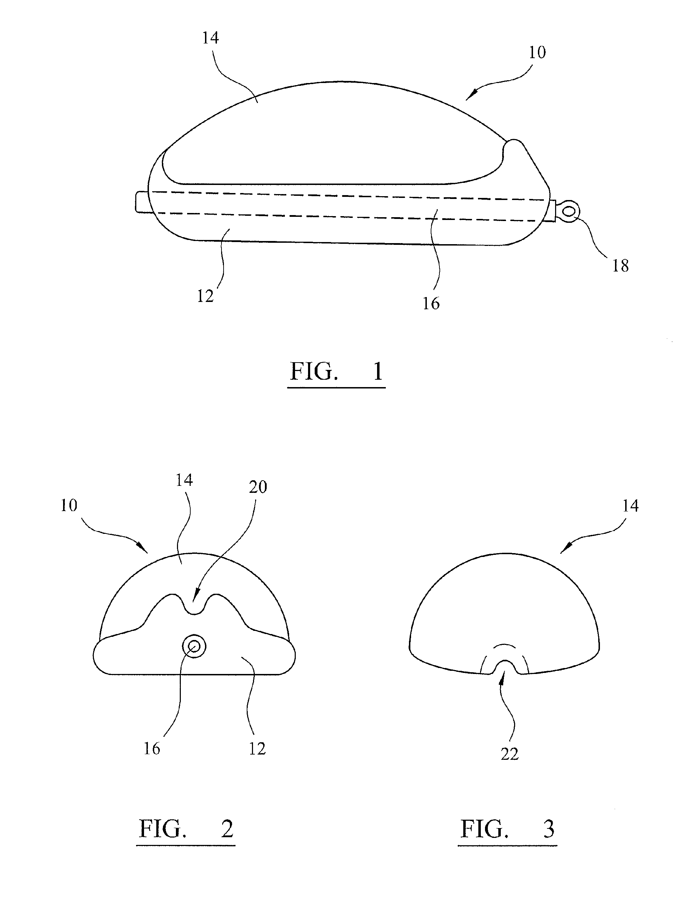

A feeder 10 according to a first embodiment of the invention is shown in Figures 1 and 2. The feeder 10 comprises a first portion, in the form of base 12, and a second (bait-retaining) portion, in the form of shell 14. The shell 14 is attachable to the base 12 by means of clips (not shown) to form a cavity in which fishing bait can be held. The feeder can be used to hold compressed bait, such as ground bait or pellets, or loose bait which cannot be compressed, such as maggots. The base 12 is formed from plastic weighted with lead or similar heavy metals such as brass, alloys, or loaded plastics. The shell 14 is formed from a soluble PVA (polyvinyl alcohol) material, for example by a moulding process. When the feeder 10 is loaded with bait and cast into water, the shell 14 dissolves to release the bait, leaving only the base 12 to be retrieved.

The base 12 has a through-tube 16 for mounting the feeder 10 in-line on a fishing line. A fishing line can be passed through in-line tube 16 and attached to a swivel 18, to which hook bait can be attached. The swivel 18 is not fixed to any part of the feeder 10, so the fishing line can be pulled through the feeder when a fish swims. Although a part of the swivel 18 may fit into one end of the tube 16, as shown, the swivel is sized slightly larger than the tube 16 to prevent the fishing line from being separated from the base 12.

The use of soluble PVA for the shell 14 of the feeder 10 provides several advantages. Not only is it mouldable, so that it can be formed into various shapes, but it can also be coloured to provide camouflage and it can be flavoured to help attract the fish to the feeder 10.

A suitable water-soluble polyvinyl alcohol (PVA) compound is Mowiflex LP TC 251, which is suitable for thermoplastic processing and is supplied by Kuraray Europe GmbH, Bruningstrabe 50, D-65926 Frankfurt am Main. Materials of this type are widely used in the form of capsules that disperse soap in dishwashers and washing machines. A suitable PVA material is also available from PVOH Polymers, Unit 4 Bankside, Love Lane, Gloucester, GLS 1YG, UK. Different thicknesses or grades of PVA may be used to produce shells 14 which dissolve at different rates.

The feeder 10 can be filled as follows. The angler holds the shell 14 upside down in one hand and tips in the amount and type of feed that he needs. The hook bait is then either positioned inside the shell 14 or is left outside, or anchored to the shell 14, according to personal preference. The weighted base 12 is then pushed firmly towards the PVA shell, locking the base 12 and shell 14 together. In this way, the base 12 and shell 14 can be used to both compress and hold the bait. This avoids the need for a separate mould, such as that which is often used to compress and shape bait on to the method feeder of the conventional type described above. However, the feeder of the present invention can also be filled with loose bait which is not compressed. This type of bait would normally be held in a different type of feeder, for example a blockend swim feeder rather than the conventional method feeder described above, because it cannot be attached to the method feeder. An advantage of the feeder 10 of the present invention is that it can be used for both loose and compressed bait.

With reference to Figures 2 and 3, the base 12 and shell 14 are each provided with tapered notches 20, 22 respectively. In use, the hook bait can be hidden inside the feeder 10, with the hook line passing through the notches 20, 22. Alternatively, hook bait can be anchored to the outside of the feeder 10 in the tapered notches 20, 22. Notches can be provided at both ends of the base 12 and shell 14 for ease of use.

It is preferable that the feeder 10 is streamlined so that there is low resistance to casting out the line with the feeder 10. In particular, it is preferable that the base 12 is streamlined, because only the base 12 remains attached to the fishing line after the shell 14 has dissolved releasing the bait. The base 12 is therefore substantially flat so that it can be retrieved, by reeling in the line, with low resistance. Unlike the known method feeder described above, the feeder 10 has no vanes or protrusions extending from its base 12. In addition to reducing resistance to movement through the water, this also means that hook baits cannot be obstructed or snag up on the base 12.

The shell 14 is preferably dome shaped or substantially semi-ellipsoidal. This configuration gives the feeder a streamlined shape when assembled, and is also easy to hold in the palm of the hand for filling.

The shell 14 can be attached to the base 12 by various means, but a preferred method is to use clips. By providing soluble clip parts on the shell 14, the time taken for the bait to be released from the feeder 10 can be further reduced, for example by making a part of the clips very thin so that they dissolve more rapidly. Preferably, one or two clip parts are provided which help to anchor the base 12 and shell 14 together sufficiently securely for the loaded feeder 10 to reach the required casting distance, but which become a weak point when submerged in water and dissolve, helping to release the shell 14 from the base 12. The rest of the shell 14, having been released from the feeder, will eventually dissolve in the water.

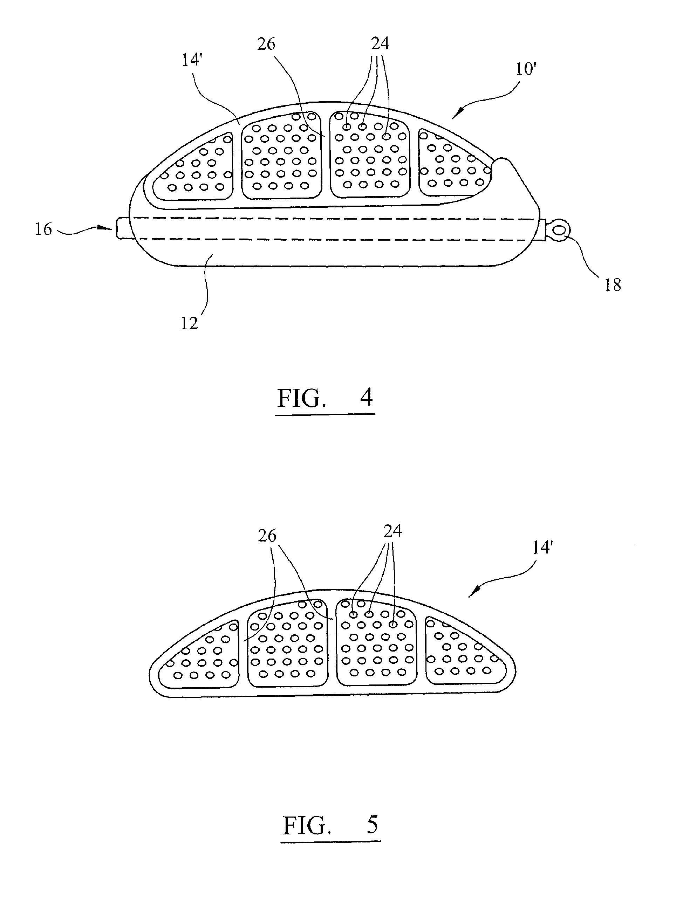

A second embodiment of the feeder 10' is shown in Figure 4. Features which are identical to features of the first embodiment are labelled with the same reference numbers. The feeder 10' of the second embodiment has the same base 12 as the feeder 10 of the first embodiment, but differs in that its shell 14' includes perforations 24 and support ridges or ribs 26. The perforations 24 help to speed up the rate at which the shell 14' dissolves in water. The size and number of the perforations can be varied in order to produce shells 14' which dissolve at different rates. The ridges or bands 26 are areas of the shell 14' which are thicker than the surrounding parts, and therefore strengthen the structure of the shell 14'. By providing ridges or bands 26, other parts of the shell 14' may be made thinner in order to vary dissolve more quickly, while the overall structure remains is sufficiently rigid to hold the bait initially.

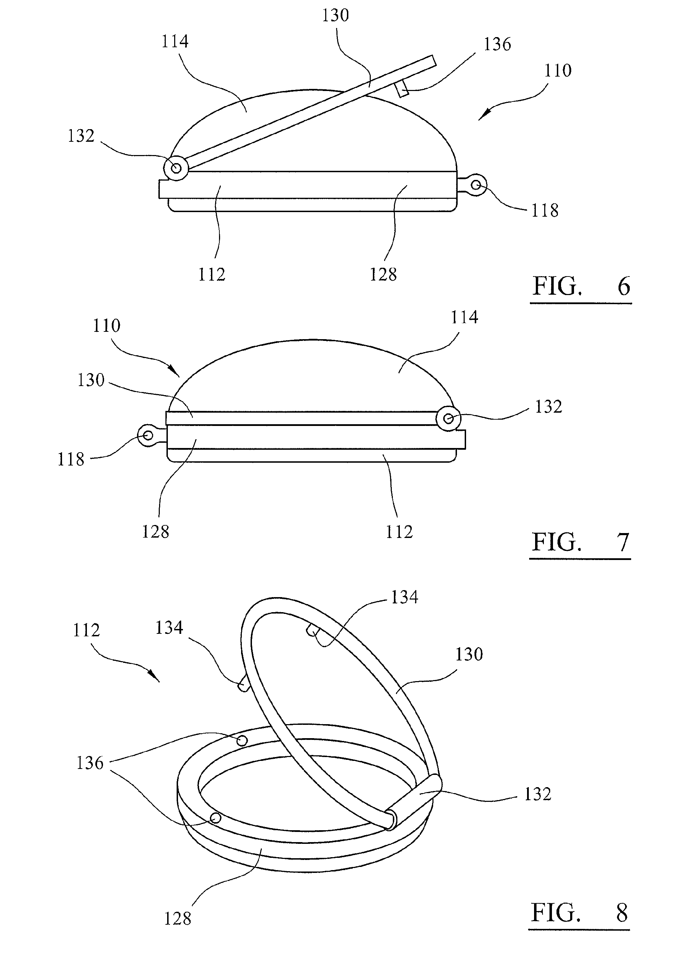

A feeder 110 according to a third embodiment of the invention is shown in Figures 6 and 7. The feeder 110 comprises a first portion, in the form of base 112, and a second (bait-retaining) portion, in the form of shell 114. The shell 114 is attachable to the base 112 to form a cavity in which fishing bait can be held.

The base 112 is shown in Figure 8 and includes a main body 128, and a retaining member in the form of frame 130. The frame 130 is connected to the main body 128 by a hinge 132, so that it can be moved between an open position (Figures 6 and 8) and a closed position (Figure 7). In the open position, a shell 114 can be positioned between the main body 128 and frame 130 of the base 112, as shown in Figure 6. Closing the frame 130 as shown in Figure 7 clamps or holds the shell 114 in place. In this way, the shell 114 is attached to the base 112.

A locking mechanism 136, 138 releasable secures the frame 130 in the closed position. In this embodiment, the locking mechanism 136, 138 includes one or more projections 134 on the frame 130 (or alternatively on the main body 128), which cooperate with one or more recesses 136 on the main body 128 (or alternatively on the frame 130). However, the skilled person will appreciate that alternative locking mechanisms may be used.

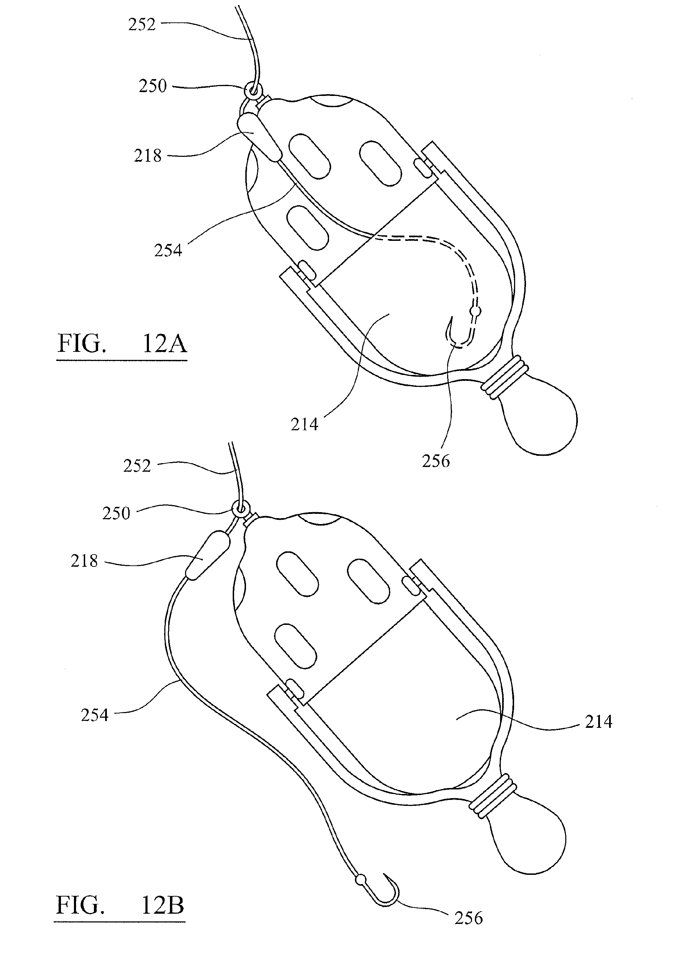

As in the first and second embodiments, the base 112 of the feeder 110 of the third embodiment is formed from plastic, weighted with lead or similar heavy metals such as brass, alloys, or loaded plastics, while the shell 114 is formed from a soluble PVA material, for example by a moulding process. The base 112 includes an in-built swivel 118 for attaching the base 112 to a fishing line, as will be illustrated in connection with the next embodiment (Figures 12A and 12B). The feeder 110 may be filled with loose or compressed bait as described in connection with the above embodiments. When the filled feeder 100 is cast into water, the shell 114 dissolves and disperses, releasing the bait and leaving only the base 112 to be retrieved.

Although the feeder 100 of the third embodiment has a substantially ring-like frame or retaining member 128 which clamps around or restrains a peripheral region of the shell 114, the retaining member may take a different form, for example, one or more hinged or rotatable arms which can be positioned to extend over the top of the shell 104 to hold it against the base 112. The clamping member may extend over a larger area of the shell 114, and/or be provided with a number of openings. Instead of a hinge attachment, a separable retaining member may be attachable to the main body of the base by, for example, a screw or bayonet arrangement, clips, or some other means such as a friction fit or press fit.

Although the first to third embodiments described above comprise a substantially flat base 12, 102 and a curved or domed shell 14, 14', 104, the skilled person will appreciate that the shape and configuration of the feeder of the present invention may be varied. For example, the base or first portion may be convex so that it can be filled with bait before attaching a flat soluble cover portion. As another example, the feeder may comprise one or more soluble end portions for closing one or more ends of a base having a substantially tubular section. In yet another example, the soluble second portion may have a jar- or bottle-like or form, the neck or rim of which can be attached to and closed by a base portion. The neck or rim may be threaded for attachment to corresponding threads on the base.

The skilled person will also appreciate that the first and second portions of the feeder of the present invention may be attached to each other by various different means, in addition to those used to attach the respective shell 14, 114 and base 12, 112 portions of the above embodiments. For example, the shell may be threaded so that it can be screwed to the base, or may have projections or recesses for a bayonet or other twist-type connection. Alternatively, the shell may slide onto the base, the base being provided with grooves or lips, or may be held by a friction fit or snap fit. The shell may also be held to the base using a band or strap, for example an elastic band, or a dissolvable band. As yet another alternative, the shell may be hingedly attached to the base, the feeder being held closed using any of the attachment means described above.

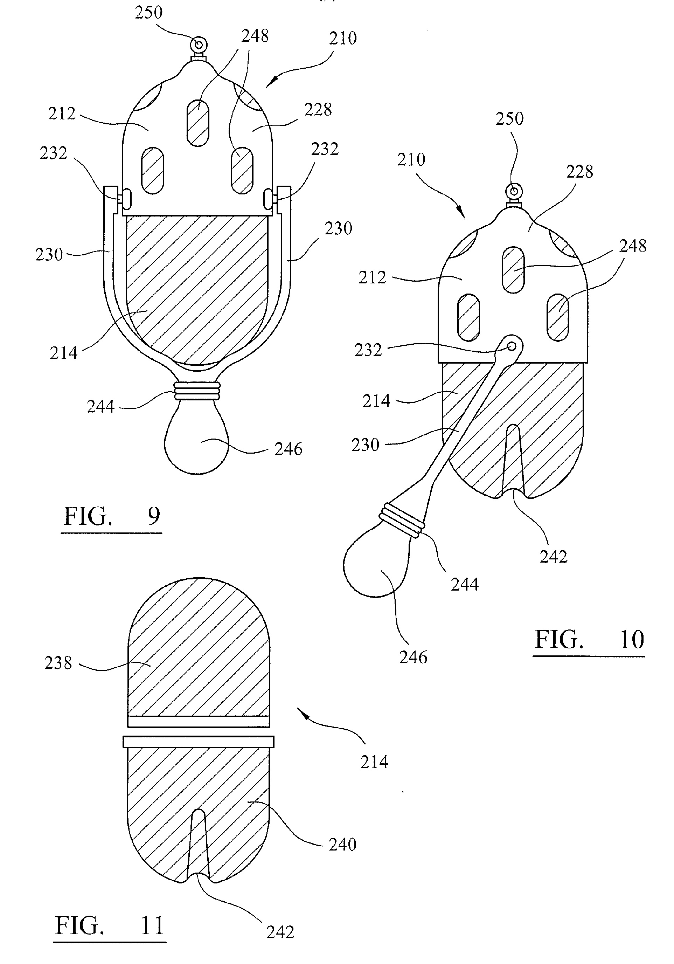

A feeder 210 according to a fourth embodiment of the invention will be described with reference to Figures 9 to 12. As shown in Figures 9 and 10, the feeder 210 comprises a first portion, in the form of base 212, and a second (bait-retaining) portion, in the form of capsule 214. The capsule 214 has an interior cavity in which fishing bait can be held. This embodiment therefore differs from the embodiments described above in that the bait-retaining portion is a capsule rather than a shell, such that fishing bait is held inside the capsule rather between a shell and a base.

The capsule 214 comprises two attachable parts 238 and 240 as shown in Figure 11, each part 238, 240 being formed from a soluble PVA material, for example by a moulding process. When the feeder 210 is loaded with bait and cast into water, the capsule 214 dissolves to release the bait, leaving only the base 212 to be retrieved.

The base 212 includes a cup-shaped main body 228, and a retaining member in the form of two rotatable arms 230 which are each connected to the main body 228 by a respective hinge 232. To attach the capsule 214 to the base 212, one end of the capsule 214 is inserted into the main body 128 of the base 212 as shown in Figure 10. The arms 230 are then rotated so that they extend around at least part of the opposite end of the capsule 214 to hold or clamp it against the main body 228 of the base 212. In this embodiment, each arm 230 lodges in a respective indent 242 provided on the capsule 214.

The main body 228 and arms 230 of the base 212 are formed from plastic. The arms 230 are joined with a threaded portion 244, to which interchangeable screw-on weights 246 can be attached.

The main body 228 of the base 212 is provided with a number of holes 248. As the capsule 214 dissolves, bait can escape from the feeder through the sides of the main body 228 as well as through the open end into which the capsule 214 is inserted.

The base 212 of the feeder 210 includes an in-built swivel 250 for mounting the feeder 210 to a fishing line. As shown in Figures 12A and 12B, a fishing line 252 can be threaded through the in-built swivel 250, and attached to a further swivel or stop 218, which prevents the base 202 from being separated from the fishing line 252. A hook link 254 can be attached to the swivel 218 and to a hook 256. The hook 256, together with any hook baits (not shown) and part or all of the hook link 254, can either be hidden inside the feeder 210 as shown in Figure 12A, or left outside as shown in Figure 12B. In the latter case, hookbaits may be anchored to the outside of the feeder 210.

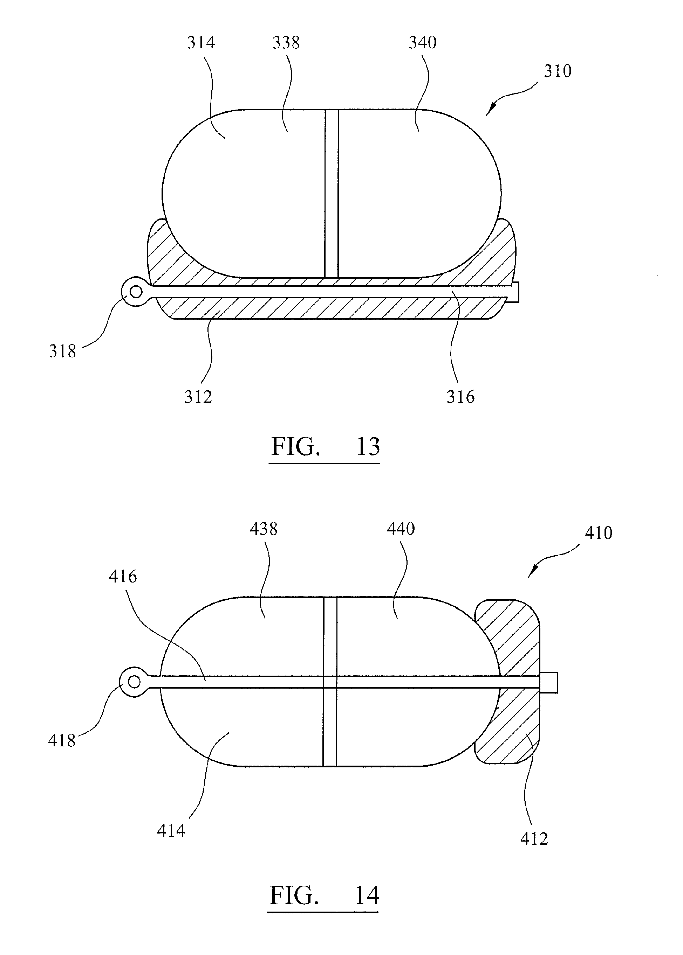

Figure 13 shows a feeder 310 according to a fifth embodiment of the invention. The feeder 310 comprises a first portion, in the form of base 312, and a second (bait-retaining) portion, in the form of capsule 314. The capsule 314 has an interior cavity in which fishing bait can be held, and is formed from two attachable parts 338 and 340 as in the previous embodiment. The capsule 314 clips or locks into the base 312.

The base 312 has a bore or through-tube 316 for mounting the feeder 310 in-line on a fishing line. A fishing line can be passed through in-line tube 316 and attached to a swivel 318, to which hook bait can be attached. As in the first and second embodiments, the swivel 318 is not fixed to the feeder 310, so the fishing line can be pulled through the feeder when a fish swims. However, the swivel 318 is sized slightly larger than the tube 316 to prevent the fishing line from being separated from the base 312.

The base 312 is formed from plastic weighted with lead or similar heavy metals such as brass, alloys or loaded plastics. Like the capsule of the previous embodiment, the capsule 314 is formed from a soluble PVA (polyvinyl alcohol) material, for example by a moulding process. When the feeder 310 is loaded with bait and cast into water, the capsule 314 dissolves to release the bait, leaving only the base 312 to be retrieved.

Figure 14 shows a feeder 410 according to a sixth embodiment of the invention. The feeder 410 comprises a first portion, in the form of base 412, and a second (bait-retaining) portion, in the form of capsule 414. The capsule 414 has an interior cavity in which fishing bait can be held, and is formed from two attachable parts 438 and 440 as in the previous embodiment.

The base 412 comprises a main body 428 and a tube 416, which serves both for mounting the feeder 410 to a fishing line and for securing the capsule 414 to the base 412. The tube 416 pushes through the capsule 414 to anchor it to the main body 428 of the base 412. A fishing line can be passed through in-line tube 416 and attached to a swivel 418, to prevent the fishing line from being separated from the base 412. As in the previous embodiment, the swivel 418 is not fixed to the base 412.

As in the embodiments described above, the capsule 414 is formed from a soluble PVA (polyvinyl alcohol) material, for example by a moulding process. When the feeder 410 is loaded with bait and cast into water, the capsule 414 dissolves to release the bait, leaving only the base 412 to be retrieved. The main body 428 of the base 412 provides a weight for the feeder 410.

The skilled person will appreciate that various shapes of capsule may be used in the feeder of the present invention, without being restricted to those shown in Figures 9 to 13. The skilled person will also appreciate that various attachment means in addition to or instead of those described above may be used to attach the capsules to the bases, including screw threads, bayonet or other twist-type fittings, clips, slide fittings, friction fit, snap fit, bands or straps, including elastic bands and dissolvable bands.

Features of the above embodiments may be combined in various ways. For example, the bases 12, 112 of the feeders of the first to third embodiments described above may be used with a capsule of an appropriate shape, and the bases of the feeders of the fourth to sixth embodiments described above may be used with a shell of an appropriate shape. Any of the shells and capsules may be provided with perforations 24 and/or ribs 26 as described in connection with the second embodiment, and any of the bases may be provided with holes 248 as described in connection with the fourth embodiment.

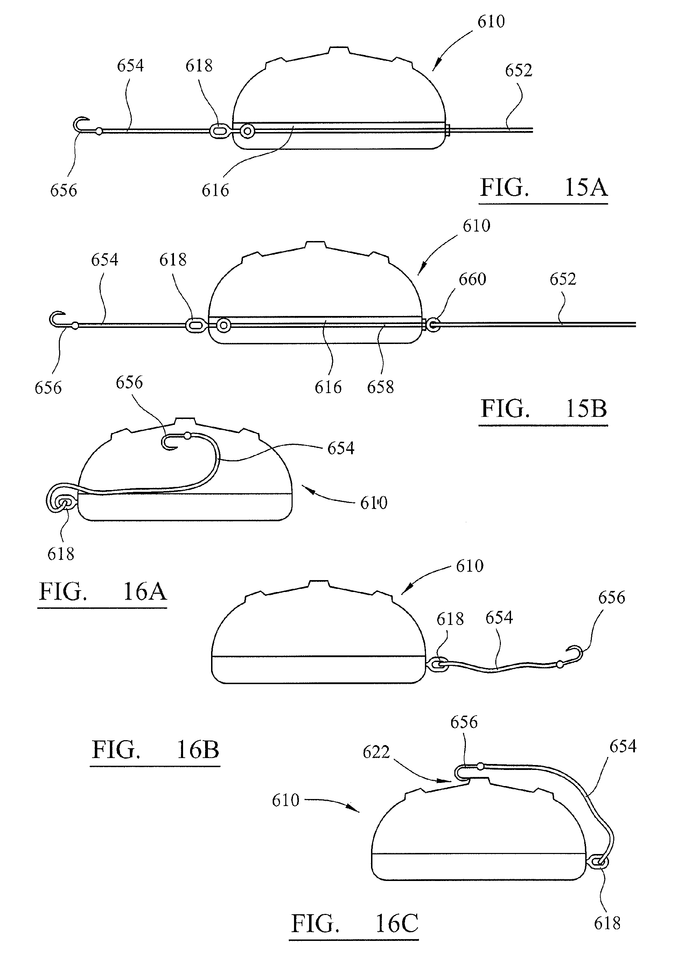

Figure 15A illustrates a standard in-line rigging configuration, which can be used in conjunction with any of the in-line feeders shown in Figures 1, 4, 13, and 14. A fishing line 652 passes through a tube 616 in a feeder 610, and is attached to a swivel 618 which prevents the feeder 610 from sliding off the fishing line 652. The hook line 654 is also attached to the swivel 618. The swivel 618 may partially fit inside the tube 616, but it is not fixed to the feeder 600. Figure 15B shows a variant of this rigging configuration, which includes a shock-absorber. An elastic line 658 is threaded through the tube 616 and attached to a swivel or ring 618, 660 at each end. The first swivel 618 is attached to the hook line 654 as before, while the second swivel or ring 660 is attached to the main fishing line 652. The elastic line 658 is retained in the tube 616 by the swivels 618, 660 and acts as a shock absorber.

Each of the embodiments described above adapted for in-line mounting to a fishing line by means of a bore or tube 16, 316, 416 may be for rigging as shown in Figures 12A and 12B, by providing an attachment point such as in-built swivel 250 shown in Figure 12A, in addition to or instead of a bore or tube. Likewise, the other embodiments may be adapted for in-line rigging.

Figures 16A-C illustrate how hook baits can be left outside of the feeder 610 (Figure 16A), anchored to notches or openings 622 on the outside of the feeder 610 (Figure 16B), for which purpose notches or openings may be provided on the shell/capsule or base, or hidden inside the feeder 610 (Figure 16C). These arrangements can be applied to any of the embodiments described above.

Since the shell 14, 14', 114, or capsule 214, 314, 414 is a disposable part of the feeder 10, 10', 110, 210, 310, 410 the feeder 10, 10', 110, 210, 310, 410 may be supplied as a kit comprising a reusable base 12, 112, 212, 312, 412 and a plurality of shells 14, 14', 114 and/or capsules 214, 314, 414.

As described above, shells and capsules can be produced which dissolve at different rates, for example by varying the thickness, grade or composition of the PVA material, and/or by providing perforations and/or ribs in the shell or capsule. Alternatively, the time taken to release bait from the feeder can be reduced by providing clips or other attachment means which are at least partially soluble for securing the shell or capsule to the base of the feeder. In this way, a weak point can be provided in the attachment means, for example, by making a soluble part of the attachment means particularly thin so that it dissolves rapidly. The feeder of the present invention can therefore be adapted to different tactical requirements. For example, one tactic might require the shell or capsule to dissolve to release the bait on a timescale of the order of a minute (for example in the range of 30 seconds to two minutes) so that the bait or feed it becomes readily available to any size of fish that are in the vicinity, while another tactic might require the shell or capsule to dissolve on a timescale of the order of a few minutes (for example in the range of two to ten minutes) so that the feed it contains doesn't attract interest from smaller fish which tend to home in first on the disturbance a feeder makes. Yet another tactic might require the shell or capsule to dissolve on a timescale of the order of ten minutes or longer (for example in the range of ten to thirty minutes), with the aim of attracting only specimen sized fish to the feed. These larger fish are wary of the initial disturbance, so the angler would not want the feed within the shell or capsule to become available too quickly. However, many other variations are possible. Therefore, the feeder 10, 10', 110, 210, 310, 410 may be provided as a kit comprising a single base12, 112, 212, 312, 412 and a plurality of shells 14, 14', 114 or capsules 214, 314, 414 having different breakdown rates in water, for example fast, medium and slow, in order to cover different tactical requirements.

It will be appreciated by persons skilled in the art that the above embodiments have been described by way of example only, and not in any limitative sense, and that various alterations and modifications are possible without departure from the scope of the invention as defined by the appended claims.

## Claims

1. A feeder for receiving fishing bait, the feeder comprising:
a first portion attachable to a fishing line; and
a second portion attachable to the first portion, wherein an interior region for holding bait is defined at least in part by the second portion;
wherein the second portion is at least partially water-soluble.

2. A feeder according to claim 1, including one or more of the following features:
(i) wherein the second portion is attachable to the first portion such that said interior region for holding bait is defined at least in part by the first and second portions;
(ii) wherein said interior region for holding bait is defined by the second portion;
(iii) wherein the second portion comprises soluble PVA;
(iv) wherein the second portion comprises a flavouring;
(v) wherein the second portion is perforated;
(vi) wherein the second portion comprises ridges or bands;
(vii) wherein said second portion is formed by a moulding process;
(viii) wherein the first portion comprises at least one notch or slot;
(ix) wherein the second portion comprises at least one notch or slot;
(x) wherein the first portion comprises a bore or through-tube for receiving a fishing line;
(xi) wherein the first portion comprises a tube adapted to receive a fishing line and to attach the first and second portions to each other;
(xii) wherein the second portion is adapted to clip on to the first portion;
(xiii) wherein the second portion is attachable to the first portion by pushing the first portion towards the second portion; or
(xiv) wherein the first portion comprises a main body and a retaining member, the retaining member being adapted to cooperate with the main body to retain or clamp the second portion.

3. A feeder according to claim 2, wherein said second portion comprises at least two parts.

4. A feeder according to claims 2 or 3, wherein at least one said notch or slot of the first portion is alignable with at least one said notch or slot of the second portion, when said first portion is attached to said second portion.

5. A feeder according to any one of claims 2 to 4, wherein the retaining member is rotatably coupled to the main body.

6. A feeder according to any one of claims 2 to 5, wherein the retaining member being adapted to contact a peripheral area of the second portion.

7. A feeder according to any one of claims 2 to 6, wherein the retaining member is adapted to engage a recess or opening in the second portion.

8. A feeder according to any one of the preceding claims, wherein the second portion comprises at least one attachment member for attaching the second portion to the first portion, the attachment member being arranged to dissolve more rapidly in water than a bulk of the second portion to release the second portion from the first portion.

9. A base of a feeder for receiving fishing bait, the base being adapted for attachment to a fishing line and to a bait-retaining portion of the feeder wherein an interior volume for holding bait is defined at least in part by the bait-retaining portion.

10. A base according to claim 9, including one of more of the following features:
(i) the base being adapted for attachment to a bait-retaining portion of the feeder such that an interior volume for holding bait is defined at least in part by the base and bait-retaining portion;
(ii) wherein a surface of the base for facing said interior volume is substantially flat;
(iii) further comprising at least one notch or slot;
(iv) further comprising a bore or through-tube for receiving a fishing line; or
(v) wherein a part of the base adapted to face said interior volume comprises at least one opening.

11. A bait-retaining portion for a feeder for receiving fishing bait, wherein:
the bait-retaining portion is attachable to a base of the feeder , an interior volume for holding bait being defined at least in part by the bait-retaining portion; and
the bait-retaining portion is at least partially water-soluble.

12. A bait-retaining portion according to claim 11, including one or more of the following features:-
(i) wherein the bait-retaining portion is attachable to the base of the feeder such that said interior volume for holding bait is defined at least in part by the base and bait-retaining portions;
(ii) wherein the interior volume for holding bait is defined by the bait-retaining portion;
(iii) wherein the bait-retaining portion comprises at least two parts;
(iv) wherein the bait-retaining portion comprises soluble PVA;
(v) wherein the bait-retaining portion comprises a flavouring;
(vi) wherein the bait-retaining portion is perforated;
(vii) wherein the bait-retaining portion comprises ridges or bands;
(viii)wherein the bait-retaining portion comprises at least one notch or slot;
(ix) wherein the bait-retaining portion is formed by a moulding process; or
(x) comprising at least one attachment member for attaching the bait-retaining portion to the base of the feeder, the attachment member being arranged to dissolve more rapidly in water than a bulk of the bait-retaining portion to release the bait-retaining portion from the base.

13. A kit comprising:
a base portion according to claim 9 or 10, and
a plurality of bait-retaining portions according to claim 11 or 12.

14. A kit according to claim 13, wherein the plurality of bait-retaining portions comprises bait-retaining portions adapted to dissolve at different rates in water.
